# EUROPEAN PATENT APPLICATION

(11) **EP 4 339 037 A1**
(43) Date of publication of application: **20.03.2024**
(21) Application number: 23197610.1
(22) Date of filing: 15.09.2023
(51) Int. Cl.: B60R 19/56, B60P 1/44

(54) **TAILGATE LIFT FOR VEHICLES**

(30) Priority: 15.09.2022 IT 202200018945
(71) Applicant: Anteo S.p.A., 40062 Molinella (BO) (IT)
(72) Inventor: Maietti, Ilmer, 48015 Cervia (RA) (IT)
(74) Representative: GCA S.R.L.

(57) **Abstract**

Tailgate lift (10) for a vehicle (100) comprising at least two support members (11) configured to support a transverse bar (12) by means of hooking means (22) cooperating with a longitudinal groove (26) formed on said transverse bar (12).

## Description

### Field of the invention

The present invention concerns a tailgate lift that can be installed on vehicles such as, for example but without limitation to the generality, trucks from 3.5 to 8 tons. The present invention also relates to the vehicle comprising said tailgate lift.

### Background of the invention

In the field of goods transport vehicles, it is known to link a tailgate lift comprising a mobile platform to the vehicle to facilitate operators in the loading andZ unloading of goods.

The tailgate lift is actuated by a plurality of hydraulic actuators that determine its movement between a vertical transport position and a tailgate position on the ground. Among the tailgate lifts known in the prior art, tailgates having an articulated parallelogram type structure are known. These tailgates provide for both an opening/closing rotation movement that brings the platform from the vertical transport position to a horizontal position in which the platform is at the height of the loading plane of the vehicle, and vice versa, and a lifting/lowering translational movement between this position and a horizontal tailgate position on the ground, during which the platform translates parallel to the ground.

These tailgates then provide for a ground connection movement, in which the platform passes from the horizontal position to an inclined position, and vice versa; in which in this inclined position the end edge furthest from the vehicle is in contact with the ground to allow operators to load/unload goods, for example through the use of pallet trucks.

Hydraulic actuators usually comprise a first pair of actuators and a second pair of actuators, one arranged on the right side and one on the left side of the vehicle. Each pair of actuators comprises a rotation actuator, configured to determine said rotation movement of opening/closing of the platform, and a lifting actuator, configured to determine said translational movement of lifting/lowering.

Normally, for the installation of a tailgate lift, the standard vehicle is suitably modified in order to prepare the installation of the tailgate. In particular, as a result of the dimensions of the tailgate and the actuators necessary for its movement, it is typically necessary to remove the original bumper of the vehicle.

In these cases, it is required by international road regulations that the vehicle be equipped with a bumper bar capable of replacing the original bumper included in the standard equipment, that is, a bar that is approved after passing the mechanical resistance tests required by these regulations.

This type of replacement bumper devices of known type normally comprise two brackets connected to the tailgate and which are indirectly supported by the vehicle chassis through an anchoring zone. These brackets are suitable for supporting an aluminum or steel bar that constitutes the part intended to absorb the kinetic energy generated by a possible impact.

However, since the anchoring area must necessarily adapt to the shape and size of the vehicle chassis, it is clear that the tailgate itself, including this bar, must in turn be suitable for connecting to the anchoring area.

There is therefore the disadvantage of having to design many different types of tailgates for the various commercial models of vehicles.

In fact, depending on the automotive manufacturer, vehicle models can have flatbeds and/or bodies that are very different from each other in shape and size, so it is difficult to adapt the distance between the brackets to the dimensions of the loading body, which is a function of the commercial vehicle model.

These shortcomings are made even more evident by the fact that the tailgates of the known type are mechanically very complex, in particular in their anchoring area.

In order to overcome this shortcoming, each bracket of the bumper device can include a hole inside which the bumper bar is inserted and can slide.

This solution, although used, has a shortcoming, which is due to the large number of components, which make these solutions heavy and expensive, as well as inconvenient and laborious to assemble.

### Purposes of the invention

One purpose of the invention is to provide a tailgate lift for a vehicle that is modular, i.e. capable of easily adapting to different vehicle models.

Another purpose of the invention is to provide a tailgate lift that can be installed on the vehicle quickly and easily.

Another purpose of the invention is to provide a tailgate lift that is economical to manufacture and lighter than solutions of known type.

According to one aspect of the invention, a tailgate lift for a vehicle is provided, in accordance with the features of claim 1.

### Brief description of the drawings

These and other aspects, characteristics and advantages of the present invention will become apparent from the detailed description of some preferred, but not exclusive, embodiments of a bumper device for vehicles, given as a non-restrictive example with reference to the attached drawings wherein:
- fig. 1 is a schematic axonometric view of a vehicle with which a tailgate lift according to an exemplary embodiment of the invention is linked;
- fig. 2 is a schematic axonometric view of an enlarged detail comprised in the tailgate of fig. 1;
- fig. 3 is a top view of the detail of fig. 2;
- fig. 4 is a partial and schematic section of a transverse bar shown in fig. 2, taken according to the section plane IV-IV of fig. 3.

### Detailed description of an example of preferred embodiment

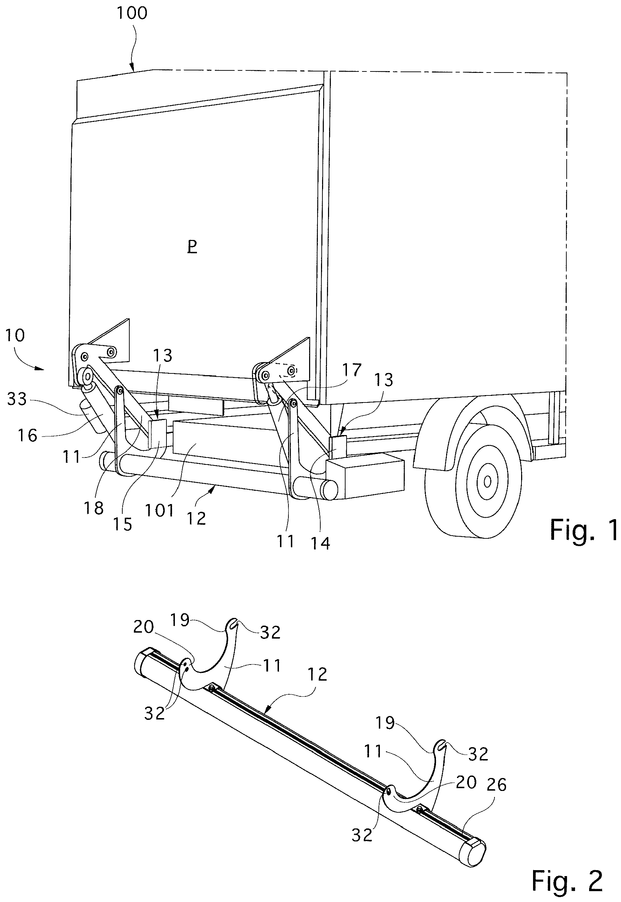

With reference to fig. 1, a tailgate lift 10 according to the present invention is configured to be linked to a vehicle 100.

Preferably, the vehicle 100 is a truck of less than eight tons in size, preferably between 3.5 and 5 tons in size. The tailgate 10 comprises a loading platform P configured to receive the goods to be loaded or unloaded onto/from the vehicle 100.

The tailgate 10 comprises two support members 11 (fig. 2) configured to be hooked directly, or indirectly, to the tailgate itself and, in addition, configured to support a transverse bar 12.

The transverse bar 12 acts as a bumper and is therefore configured to absorb the energy that is generated during a possible impact. Moreover, as will become clearer from the following detailed description, the transverse bar 12 also performs a structural function for the tailgate 10.

The tailgate 10 comprises connection means 13 which connect it to a chassis 101 of the vehicle 100 by means of any known fastening member. These connection means 13 include suitable mechanical connection members, such as brackets, plates, crossbeams, which are fixed to the chassis 101 in any appropriate known manner, typically by bolting.

In the example illustrated, the connection means 13 comprise a right anchoring bracket 14 and a left anchoring bracket 15, respectively fixed to the right and left side of the vehicle 100.

The right anchoring bracket 14 and the left anchoring bracket 15 are separate and spaced apart from each other, each being independently connected to the chassis 101. As will become clearer hereinafter, this type of anchoring of the tailgate 10 to the vehicle 100 makes it necessary to be able to vary a center distance I between said support members 11.

The tailgate 10 also comprises a lifting actuator 16 and a rotation actuator 17, both connected to the connection means 13 at the respective end thereof.

Both the lifting 16 and rotation 17 actuators are configured as movement means of the platform P and are hydraulic actuators in which the operating fluid is an oil suitable for industrial uses.

In the example provided herein, the lifting actuator 16 is disposed on the left side of the vehicle 100, and is thus connected to the left connection member 15, while the rotation actuator 17 is disposed on the right side of the vehicle 100, and is thus connected to the right connection member 14.

Compared to the solutions known in the art, which comprise two pairs of actuators, one on the right and one on the left, each comprising both a lifting actuator and a rotation actuator, the tailgate 10 according to the present invention comprises only two actuators, making it cheaper and lighter than the known solutions.

In the illustrated example, the tailgate 10 also comprises a compensation actuator 33, which is in fluid communication with both the lifting actuator 16 and the rotation actuator 17 to control the tilting movement towards the ground of the platform P in its terminal ground connection stroke. In the example provided herein, the compensation actuator 33 is disposed on the left side of the vehicle 100, linked to the lifting actuator 16.

The tailgate 10 comprises a pair of arms 18, arranged with one on the right side and the other on the left side of the vehicle 100 (fig. 1).

The support members 11 are each connected to a respective arm of the pair of arms 18, in a manner that will be explained in greater detail below.

Each arm 18 is pivoted on the connection means 13 at a first end thereof. The arm 18 disposed on the right side is pivoted on the right anchoring bracket 14, while the arm 18 disposed on the left side is pivoted on the left anchoring bracket 15.

The platform P is pivoted on the pair of arms 18, at their respective second ends, opposite said first ends.

The lifting actuator 16 is connected on one side to said left anchoring bracket 15 and, on the other side, to said arm 18, while the rotation actuator 17 is connected on one side to said right anchoring bracket 14 and on the other side to said platform P.

Since the connection of the platform P to the chassis 101 of the vehicle 100 takes place through the pair of arms 18 at the two different anchoring brackets 14 and 15, right and left, different and not connected to each other, and since only a lifting actuator 16 and a rotation actuator 17 are provided, arranged one on the right side and one on the left side of the vehicle, it is evident that the transverse bar 12 has a structural function of homogeneously transmitting the movement determined by the lifting actuator 16 between the two sides, right and left, of the vehicle 100. In this way the transverse bar 12 allows the torque that is generated to be transmitted from one side to the other of the vehicle 100, to avoid unwanted inclinations between the right side and the left side of the platform P.

Each support member 11 is configured as a bracket comprising a first hooking portion 19 and a second hooking portion 20 (fig. 2), configured to be connected to each arm 18 at two different points. This conformation of the support member 11 allows a stable anchoring of the transverse bar 12 to the tailgate 10, in particular to the pair of arms 18, adapted to transmit torque from the right side to the left side of the tailgate.

In another embodiment, not shown, one of the two hooking portions 19, 20 of one of the two support members 11 is hooked to the respective point of the arm 18 by means of an adjustment mechanism that allows one support member 11 to be offset angularly with respect to the other, for example by a few degrees or even more. The presence of the adjustment mechanism makes it possible to adjust the magnitude of the torque that is transmitted by the transverse bar 12 between the right side and the left side of the vehicle 100. Each support member 11 may comprise one or more connection elements 32, such as holes, slots or recesses suitable for connecting in corresponding coupled elements, for example pins, screws, plugs or protrusions, provided on each of the arms 18.

Each support member 11 also comprises a support portion 21 configured to cooperate with hooking means 22 suitable for hooking the transverse bar 12 to the support member 11.

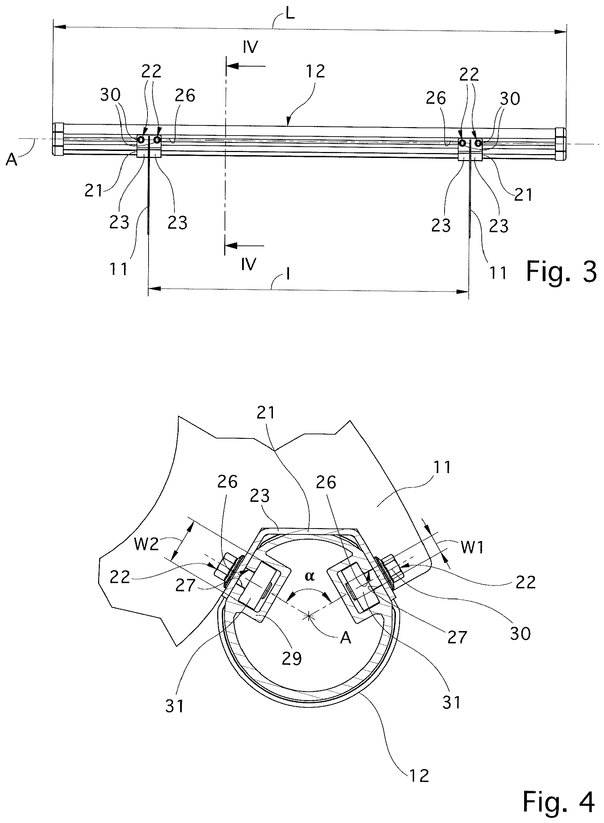

In the example provided here, the support portion 21 has a shape that is conjugate with a portion of the external surface of the protection member 12 and comprises at least one plate 23 (fig. 4).

The protection member 12 is elongated and extends along a longitudinal extension axis A (fig. 3).

In the example provided here, the device 10 comprises two support members 11, spaced apart from one another by a center distance I (fig. 3), measured parallel to the longitudinal extension axis A. As will be clear from the following detailed description, by means of the present invention, the center distance I is variable as a function of the center distance of the chassis 101 of the vehicle 100.

In the example provided here, the transverse bar 12 is preferably made of a metal material such as aluminum, or steel, and is obtained for example by means of an extrusion process.

In accordance with one aspect of the invention, at least one groove 26 (fig. 4) is formed on the transverse bar 12 and extends parallel to the longitudinal axis A, preferably along its entire length L. The groove 26 is configured to receive the aforementioned hooking means 22. In addition, the groove 26 is also configured to allow the sliding of said hooking means 22, and therefore of said support members 11, along the longitudinal axis A.

Said groove 26 comprises both a surface portion 27, fitting with the external surface of the transverse bar 12, having a first width W1, and an internal portion 29, below and communicating with the surface portion 27, and having a second width W2 greater than the first width W1. The hooking means 22 comprise at least one screw 30 and a block 31 inserted in the groove 26, in particular in its internal portion 29. This internal portion 29 is configured to receive a respective block 31, which is therefore suitably sized to be received in the internal portion 29.

The plate 23 and the block 31 are provided with respective holes, not shown, crossed by the screw 30. The block hole 31 is threaded to allow the correct clamping of the screw 30.

In the example provided herein, two grooves 26 having a substantially equal cross-section, and angled with respect to each other by an angle α greater than 90°, for example corresponding to about 120°, are formed on the transverse bar 12.

The presence of two grooves offset angularly from each other is advantageous because it allows the connection between the plate 23 and the transverse bar 12 to be made more rigid.

The plate 23 is shaped so as to at least partially surround the transverse bar 12 so as to overlap said two grooves 26.

Consequently, the hooking means 22 comprise at least eight screws 30, at least four of which are linked with one of the two support members 11 and at least four of which are linked with the other support member 11.

The device 10 of the present invention is particularly advantageous as it allows the assembly times of the tailgate 10 to be greatly reduced. In fact, the tailgate 10, or at least its part comprising the support members 11 and the transverse bar 12 can be stored in a warehouse already pre-assembled, with the screws 30 loosened with respect to the respective blocks 31, which are already arranged inside the internal portions 29.

In doing so, to install the tailgate 10 to the vehicle 100, it is sufficient to translate the support members 11 along the longitudinal axis A until they are spaced apart by the desired center distance I, related to the center distance of the chassis 101 of the vehicle 100 and, subsequently, tighten the screws 30.

In addition to reducing the installation time of the tailgate 10 on the vehicle 100, such conformation is also advantageous because the tailgate 10 can be adapted each time to any type of vehicle 100 easily and quickly. This means that it is sufficient to store in the warehouse a single tailgate 10 in accordance with the present invention, which is suitable for being linked to a plurality of commercial vehicle models, without the need to purchase and maintain a plurality of tailgates, for example one or more for each different commercial vehicle model.

By means of the present invention, it is therefore possible to store a desired number of tailgates 10, without knowing in advance the vehicle model on which they will be installed, since the support members 11 can advantageously be placed at different center distances I directly at the time of installation. It is clear that this is very advantageous both because it allows the workshops for setting up the vehicles to reduce the value of the material held in stock in the warehouse, and to reduce the volume of the warehouses required. In addition, in the event that these workshops are located far away, even in countries or continents other than those in which the manufacturer of the tailgate is located, the present invention also allows avoiding waiting for the delivery time of the particular piece; time that can sometimes be as long as several weeks.

It has been found in practice that the invention achieves the intended objects.

The invention thus conceived is susceptible to modifications and variations, all falling within the inventive concept.

In addition, all the details can be replaced with other technically equivalent elements.

In practice, the materials employed, as well as the shapes and the dimensions, may be any according to requirements without thereby departing from the scope of protection defined by the following claims.

## Claims

1. Tailgate lift (10) for a vehicle (100) comprising:
- a loading platform (P),
- a pair of support arms (18) which connect said platform (P) to a chassis (101) of said vehicle (100),
- a transverse bar (12) configured to act as a bumper bar and to perform a structural function for said platform (P), wherein said transverse bar (12) extends along a longitudinal axis (A), perpendicular to a main axis of the vehicle (100),
- at least two support members (11) each attached to one respective arm of said pair of support arms (18) and configured to support said transverse bar (12),
- hooking means (22) configured to hook said transverse bar (12) to said at least two support members (11) in a releasable manner,
said tailgate (10) is **characterized in that** said transverse bar (12) comprises at least one groove (26) parallel to said longitudinal axis (A) and configured to cooperate with said hooking means (22).

2. Tailgate (10) as in claim 1, comprising two support members (11) and **characterized in that** said two support members (11) are distanced from each other by a variable center distance (I), measured parallel to said longitudinal axis (A).

3. Tailgate (10) as in claim 1 or 2, **characterized in that** said at least one groove (26) comprises both a surface portion (27) that mates with an external surface of said transverse bar (12) and has a first width (W1), and also an internal portion (29) that lies below and communicates with said surface portion (27) and has a second width (W2) greater than said first width (W1).

4. Tailgate (10) as in claim 3, **characterized in that** said hooking means (22) comprise at least one screw (30) and at least one block (31) inserted in said groove (26) and configured to cooperate with said at least one screw (30).

5. Tailgate (10) as in claim 4, **characterized in that** said internal portion (29) is configured to receive said at least one block (31), which is suitably sized so as to be accommodated in said internal portion (29).

6. Tailgate (10) as in any claim from 3 to 5, comprising two grooves (26) and **characterized in that** said two grooves (26) have a substantially equal cross-section and are angled with respect to each other by an angle (α) greater than 90°.

7. Tailgate (10) as in any claim hereinbefore, **characterized in that** it comprises movement means (16, 17) of said platform (P) which comprise a lifting actuator (16) and a rotation actuator (17), and **in that** one support arm of said pair of support arms (18) and one of either said lifting actuator (16) or said rotation actuator (17) are connected to said chassis (101) by means of a right anchoring bracket (14), while the other support arm of said pair of support arms (18) and the other of either said lifting actuator (16) or said rotation actuator (17) are connected to said chassis (101) by means of a left anchoring bracket (15), which is separate and independent from said right anchoring bracket (14), so that said transverse bar (12) structurally connects said pair of support arms (18).

8. Tailgate (10) as in claim 7, **characterized in that** said lifting actuator (16) is connected on one side to said left anchoring bracket (15) and, on the other side, to said arm (18), and **in that** said rotation actuator (17) is connected on one side to said right anchoring bracket (14) and on the other side to said platform (P).

9. Tailgate (10) as in any claim hereinbefore, **characterized in that** each arm (18) of said pair is pivoted, in correspondence with its first ends, to said right anchoring bracket (14) and to said left anchoring bracket (15), respectively, and in correspondence with its respective second ends, opposite said first ends, to said platform (P).

10. Vehicle (100) comprising a tailgate (10) as in any claim hereinbefore.
